# EUROPÄISCHE PATENTSCHRIFT

(11) **EP 2 828 272 B1**
(45) Veröffentlichungstag und Bekanntmachung des Hinweises auf die Patenterteilung: **19.10.2016**
(21) Anmeldenummer: 13718495.8
(22) Anmeldetag: 14.03.2013
(51) Int. Cl.: C07F 9/6506, C07F 15/00, C07F 15/04, C07F 7/12

(54) **CARBEN-ÜBERTRAGUNGSREAGENZ**
CARBENE TRANSFER REAGENT
RÉACTIF DE TRANSITION À BASE DE CARBÈNES

(30) Priorität: 23.03.2012 DE 102012102535
(43) Veröffentlichungstag der Anmeldung: 28.01.2015
(73) Patentinhaber: Jacobs University Bremen gGmbH, 28759 Bremen (DE)
(72) Erfinder: RÖSCHENTHALER, Gerd-Volker, 28357 Bremen (DE); BÖTTCHER, Tobias, 21614 Buxtehude (DE); BASSIL, Bassem, S., 28759 Bremen (DE)
(74) Vertreter: Weidner Stern Jeschke
(86) Internationale Anmeldenummer: PCT/DE2013/100102
(87) Internationale Veröffentlichungsnummer: WO 2013/139332

(56) Entgegenhaltungen:
- US-A1- 2010 041 895
- NORBERT KUHN ET AL: "Derivate des Imidazols, XIII. Carben-Komplexe des Siliciums und Zinns", CHEMISCHE BERICHTE, Bd. 128, Nr. 3, 1. März 1995 (1995-03-01), Seiten 245-250, XP055063787, ISSN: 0009-2940, DOI: 10.1002/cber.19951280307
- OLDAMUR HOLLOCZKI ET AL: "Stability and Structure of Carbene-Derived Neutral Penta- and Hexacoordinate Silicon Complexes", ORGANOMETALLICS, Bd. 28, Nr. 14, 27. Juli 2009 (2009-07-27) , Seiten 4159-4164, XP055063789, ISSN: 0276-7333, DOI: 10.1021/om9002768 -& DATABASE CA [Online] CHEMICAL ABSTRACTS SERVICE, COLUMBUS, OHIO, US; HOLLOCZKI, OLDAMUR ET AL: "Stability and Structure of Carbene-Derived Neutral Penta- and Hexacoordinate Silicon Complexes", XP002697922, gefunden im STN Database accession no. 2009:756398
- Z. LIU: "Chemical Bonding in Silicon-Carbene Complexes", THE JOURNAL OF PHYSICAL CHEMISTRY A, Bd. 113, Nr. 22, 4. Juni 2009 (2009-06-04) , Seiten 6410-6414, XP055063797, ISSN: 1089-5639, DOI: 10.1021/jp902308d
- KENICHI OGATA ET AL: "The reaction of amidinato(pyridine) complexes of molybdenum and tungsten with triethylborane adduct of N-heterocyclic carbene (NHC.BEt3): Investigation on the reactivity of NHC.BEt3 as carbene precursor toward transition metal complexes", JOURNAL OF ORGANOMETALLIC CHEMISTRY, Bd. 690, Nr. 24-25, 1. Dezember 2005 (2005-12-01), Seiten 5701-5709, XP055064668, ISSN: 0022-328X, DOI: 10.1016/j.jorganchem.2005.07.015
- TOBIAS BÖTTCHER ET AL: "(NHCMe)SiCl4: a versatile carbene transfer reagent - synthesis from silicochloroform", CHEMICAL SCIENCE, Bd. 4, Nr. 1, 13. September 2012 (2012-09-13), Seite 77, XP055063782, ISSN: 2041-6520, DOI: 10.1039/c2sc21214e
- DAVID J. D. WILSON ET AL: "Are N-Heterocyclic Carbenes "Better" Ligands than Phosphines in Main Group Chemistry? A Theoretical Case Study of Ligand-Stabilized E 2 Molecules, L-E-E-L (L = NHC, phosphine; E = C, Si, Ge, Sn, Pb, N, P, As, Sb, Bi)", INORGANIC CHEMISTRY, Bd. 51, Nr. 14, 16. Juli 2012 (2012-07-16) , Seiten 7657-7668, XP055063783, ISSN: 0020-1669, DOI: 10.1021/ic300686n
- Tobias Böttcher: "Complexes of Selected Main Group Element Chlorides and Fluorides with Sterically Non-Demanding Carbenes", PhD Thesis, 16 June 2012 (2012-06-16), XP055218700, Retrieved from the Internet: URL:http://d-nb.info/1035264862/34 [retrieved on 2015-10-07]
- Tobias Böttcher ET AL: "Complexes of Ge(IV)- and Sn(IV)-Fluorides with Cyclic and Acyclic Carbenes: Bis(dialkylamino)-difluoromethylenes as Carbene Sources", Inorganic Chemistry, vol. 51, no. 2, 16 January 2012 (2012-01-16), pages 763-765, XP055063784, ISSN: 0020-1669, DOI: 10.1021/ic202008m

## Beschreibung

Die Erfindung betrifft ein neues Verfahren zur Herstellung eines Carben-Übertragungsreagenzes sowie dessen Verwendung.

Liganden des zweibindigen Kohlenstoffs, so genannte Carbene, finden in der chemischen Industrie zunehmende Verwendung, z.B. bei der Herstellung metallorganischer Komplexe, die als Katalysatoren für z.B. homogenkatalytische Reaktionen eingesetzt werden. Carbene fungieren in solchen Katalysatoren als Liganden zur Stabilisierung der Metalle, bei denen es sich häufig um Übergangsmetalle handelt. Carben-Komplexe von Übergangsmetallen sind sehr potente und in der chemischen Industrie vielseitig verwendbare Katalysatoren für z.B. Feinchemikalien und großtechnische Prozesse, z.B. als Grubbs-Katalysator für die Olefinmetathese oder für die Suzuki-Kreuzkupplung.

N-heterocyclische Carbene (NHC) bilden eine Gruppe heterocyclischer Verbindungen, die stabile Carbene ausbilden können. Beispiele hierfür sind die von Arduengo III et al. [1] erstmals isolierten und kristallisierten 1,3-Di-R-imidazol-2-ylidene. Seit der Veröffentlichung des ersten freien N-heterocyclischen Carbens, sind zahlreiche Übergangsmetallkomplexe mit NHC-Liganden synthetisiert worden [1-6]. Das Hauptinteresse liegt dabei auf den zum Teil außergewöhnlichen katalytischen Eigenschaften dieser Verbindungen, über die umfassend publiziert worden ist [7-12]. NHC sind auch verwendet worden, um N-heterocyclische Silane und Silylene herzustellen [17]. Kuhn et al. 1995 beschreiben NHC-Komplexe des Siliziums [18], Ogata et al. 2006 beschreiben Triethylboran-NHC-Addukte und deren Verwendung als Carben-Übertragungsreagenz [19]. Böttcher et al. 2012 beschreiben Carben-Komplexe von Ge(IV)- und Sn(IV)-Fluoriden [20]. In US 201 0/041895 A1 ist der Einsatz bestimmter NHC-SiCl₄-Komplexe als Ausgangsmaterial zur Herstellung neutraler Verbindungen mit homonuklearen Einfach- oder Doppelbindungen beschrieben.

Die Darstellung von NHC-Metallkomplexen erfolgt auf verschiedenen Wegen. In der Praxis werden hierzu bislang folgende Verfahren eingesetzt:
a) Addition von freiem NHC: Dieses Verfahren ist nur mit solchen NHCs möglich, die durch sperrige Substituenten in N,N'-Position stabilisiert sind.
b) (In-situ-)Deprotonierung von Azolium-Salzen: Diese Methode ist empfindlich, da das in situ erzeugte NHC sehr reaktiv ist. Geeignet ist das Verfahren für solche Verbindungen, die unter geeigneten Bedingungen eine Base als Ligand tragen (z.B. Acetate).
c) Oxidative Addition an 2-Halo-imidazolium/imidazolinium-Salze: Bei diesem Verfahren muss die Ausgangsverbindung das Metall in niedriger Oxidationsstufe enthalten, da eine Oxidation um zwei Oxidationsstufen stattfindet. Diese sind nicht für alle Metalle leicht zugänglich und sind meist kostspielig und empfindlich.
d) Carben-Transfer / Transmetallation: Hierbei handelt es sich um ein Verfahren zur Übertragung von nicht-stabilen NHCs an sensible Metallverbindungen. Dabei werden NHC-Komplexe von Silber(I) und Kupfer(I) eingesetzt. Silber(I)-NHC-Komplexe zur Carben-Übertragung wurden bereits 1998 vorgestellt [13, 14].

Neben den NHC sind auch acyclische Diaminocarbene (ADC) bekannt geworden, die zunehmend an Bedeutung gewinnen [15, 16].

Aufgabe der vorliegenden Erfindung ist es, die Herstellung von Carben-Komplexen, beispielsweise von Carben-Metallkomplexen, zu erleichtern. Insbesondere ist es Aufgabe der vorliegenden Erfindung, eine Alternative zu den aus dem Stand der Technik bekannten Verfahren zur Herstellung von Carbenübertragungsreagenzien bereitzustellen.

Gelöst wird die Aufgabe durch die Gegenstände der nebengeordneten Ansprüche. Vorteilhafte Ausgestaltungen der Erfindung sind in den Unteransprüchen angegeben.

Die Erfindung ermöglicht den Transfer von N-heterocyclischen und acyclischen Carben-Liganden, insbesondere solcher, die über kleine Substituenten in N,N'-Position verfügen und nicht in freier Form isolierbar sind.

In einem ersten Aspekt stellt die Erfindung ein Verfahren zur Herstellung einer Verbindung gemäß der folgenden Formel Ia 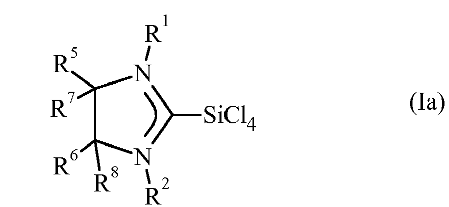 oder einer Verbindung gemäß der folgenden Formel Ib 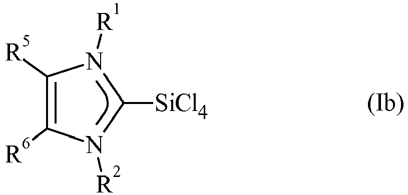 bereit, wobei
R¹ und R², unabhängig voneinander H, substituiertes oder unsubstituiertes Alkyl, substituiertes oder unsubstituiertes Zykloalkyl, substituiertes oder unsubstituiertes Heteroalkyl, substituiertes oder unsubstituiertes Aryl oder substituiertes oder unsubstituiertes Heteroaryl sind, mit der Maßgabe, dass R¹ und/oder R² nicht substituiertes oder unsubstituiertes Phenyl sind, und
R⁵, R⁶, R⁷ und R⁸ unabhängig voneinander H, substituiertes oder unsubstituiertes Alkyl, substituiertes oder unsubstituiertes Zykloalkyl, substituiertes oder unsubstituiertes Heteroalkyl, substituiertes oder unsubstituiertes Aryl oder substituiertes oder unsubstituiertes Heteroaryl sind
wobei
a) zur Herstellung der Verbindung gemäß der folgenden Formel Ia 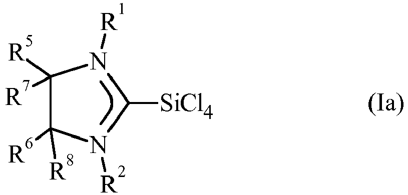 eine Verbindung der folgenden Formel IIa 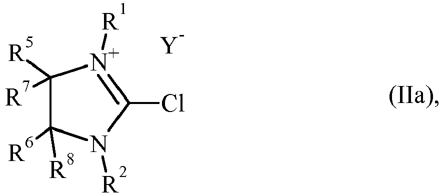 wobei R¹, R², R⁵, R⁶, R⁷ und R⁸ wie oben definiert sind und Y⁻ ein geeignetes Gegenion ist, unter geeigneten Bedingungen mit Trichlorsilan HSiCl₃ in Reaktion gebracht wird, oder
b) zur Herstellung der Verbindung der folgenden Formel Ib 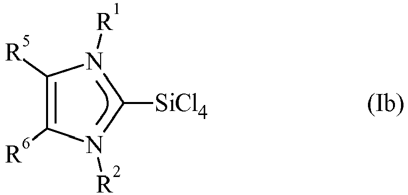 eine Verbindung der folgenden Formel IIb 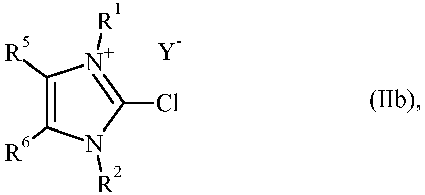 wobei R¹, R², R⁵ und R⁶ wie oben definiert sind und Y⁻ ein geeignetes Gegenion ist, unter geeigneten Bedingungen mit Trichlorsilan HSiCl₃ in Reaktion gebracht wird.

Ein Carben-Übertragungsreagenz gemäß Formel Ia oder Ib kann vorteilhaft nicht nur zur Darstellung von Carben-Komplexen mit Übergangsmetallen, sondern auch von Carben-Komplexen mit Hauptgruppenelementen verwendet werden. Das Reagenz ist bei Raumtemperatur stabil, bedarf vor dem Einsatz keiner weiteren Aktivierung, ist vielseitig einsetzbar und ist überdies mit Hilfe des erfindungsgemäßen Verfahrens leicht und kostengünstig herstellbar. An Stelle bisher verwendeter teurer Reagenzien auf Basis von Silber und Kupfer erfolgt die Darstellung erfindungsgemäß aus dem kostengünstigen Industrieprodukt Silicochloroform (Trichlorsilan). Darüber hinaus ist bei dem erfindungsgemäßen Verfahren auch keine Metallabscheidung/-reduktion möglich wie bei Ag(I)/Cu(I)-Komplexen.

Unter "Carbenübertragung" oder "Carbentransfer" wird hier die Addition eines Carbens an ein Atom oder Molekül, z.B. an ein Metallatom verstanden. Unter "Carben" wird hier eine Verbindung der Formel | CR₂, d.h. ein ungeladenes zweifach substituiertes Kohlenstoffzentrum mit Elektronensextett, verstanden. Der Begriff "Carbenligand" bedeutet hier einen Liganden in Form eines Carbens.

Unter einem N-heterocyclischen Carben (NHC) wird hier eine Verbindung mit einer der folgenden Strukturen (III a, b) verstanden.

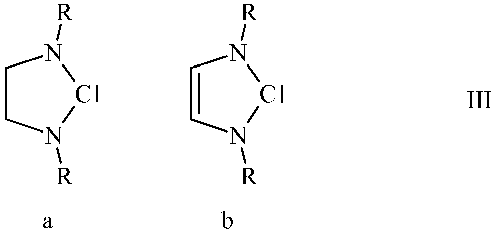

Unter einem "NHC-Liganden" wird ein NHC als Ligand verstanden, z.B. in einem NHC-Übergangsmetallkomplex.

Unter einem acyclischen Diaminocarben (ADC) wird hier eine Verbindung der allgemeinen Struktur V 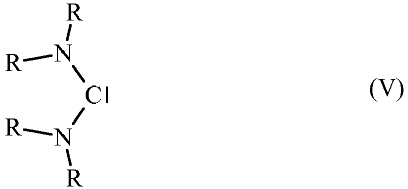 verstanden, mit der Maßgabe, dass zwei der Reste R keinen Ring zusammen mit den Stickstoffatomen und dem Carben-Kohlenstoff bilden.

Unter einem "ADC-Liganden" wird ein ADC als Ligand verstanden, z.B. in einem ADC-Übergangsmetallkomplex.

Unter "Transmetallierung" wird hier die Übertragung eines Carben-Liganden von einem Metall-Komplex auf einen anderen Metall-Komplex unter Bildung eines neuen Carben-MetallKomplexes verstanden.

Unter "Übergangsmetall" wird hier ein Element mit einer der Ordnungszahlen von 21 bis 30, 39 bis 48, 57 bis 80 und 89 bis 112, 21, d.h. die Elemente Sc, Ti, V, Cr, Mn, Fe, Co, Ni, Cu, Zn, Y, Zr, Nb, Mo, Tc, Ru, Rh, Pd, Ag, Cd, La, Hf, Ta, W, Re, Os, Ir, Pt, Au, Hg, Ac, Rf, Db, Sg, Bh, Hs, Mt, Ds, Rg und Cn, verstanden.

Unter dem Begriff "Hauptgruppenelement" wird hier ein Element mit einer der Ordnungszahlen von 1 bis 20, 31 bis 38, 49 bis 56, 81 bis 88, 113 bis 118 oder ein Element aus einer der IUPAC-Gruppen 1, 2, 13, 14, 15, 16, 17 und 18 verstanden.

Der Begriff "Alkyl" beinhaltet gesättigte aliphatische (nicht-aromatische) Gruppen, einschließlich geradkettiger Alkylgruppen (z.B. Methyl, Ethyl, Propyl, Butyl, Pentyl, Hexyl, Heptyl und Octyl) und verzweigtkettiger Alkylgruppen (z.B. Isopropyl, tert-Butyl, Isobutyl).

Der Begriff "Zykloalkyl" beinhaltet alizyklische Gruppen, d.h. ringförmige gesättigte aliphatische (nicht-aromatische) Gruppen, z.B. Zyklopropyl, Zyklopentyl, Zyklohexyl, Zykloheptyl, Zyklooctyl.

Der Begriff "Heteroalkyl" beinhaltet ferner Alkylgruppen, bei denen ein oder mehrere Kohlenstoffatome des Kohlenwasserstoffgerüsts durch andere Atome (Heteroatome), z.B. Sauerstoff-, Stickstoff-, Schwefel- oder Phosphoratome, ersetzt sind. Der Begriff "Heteroalkyl" umfasst auch Zykloalkyle, bei denen ein oder mehrere Kohlenstoffatome des Kohlenwasserstoffgerüsts durch andere Atome, z.B. Sauerstoff-, Stickstoff-, Schwefel- oder Phosphoratome, ersetzt sind. Der Begriff umfasst auch O-, N-, S- oder P-Heteroalkylgruppen, d.h. Heteroalkylgruppen, die über ein Sauerstoff-, Stickstoff-, Schwefel- oder Phosphoratom an eine Verbindung gebunden sind.

Unter "Aryl" werden Gruppen mit Aromatizität verstanden, einschließlich 5- und 6-gliedrigen aromatischen Einzelringgruppen sowie multizyklischen Systemen mit mindestens einem aromatischen Ring. Beispiele für Aryl-Gruppen beinhalten Benzol, Phenyl und Naphthalen. Der Begriff umfasst auch O-, N-, S- oder P-Arylgruppen, d.h. Arylgruppen, die über ein Sauerstoff-, Stickstoff-, Schwefel- oder Phosphoratom an eine Verbindung gebunden sind.

Unter "Heteroaryl" werden Aryl-Gruppen verstanden, die Heteroatome in der Ringstruktur aufweisen, bei denen also ein oder mehrere Kohlenstoffatome in der Ringstruktur durch andere Atome (Heteroatome) ersetzt sind, z.B. durch Sauerstoff-, Stickstoff-, Schwefel- oder Phosphoratome. Beispiele für Heteroaryle sind Pyrrol, Furan, Thiophen, Thiazol, Isothiazol, Imidazol, Triazol, Tetrazol, Pyrazol, Oxazol, Pyridin, Pyrazin, Pyridazin und Pyrimidin. Der Begriff beinhaltet auch multizyklische Aryl-Gruppen, z.B. bizyklische und trizyklische, z.B. Benzoxazol, Benzodioxazol, Benzothiazol, Benzoimidazol, Benzothiophen, Methylendioxyphenyl, Quinolin, Isoquinolin, Indol, Benzofuran, Purin oder Benzofuran. Der Begriff umfasst auch O-, N-, S- oder P-Heteroarylgruppen, d.h. Heteroarylgruppen, die über ein Sauerstoff-, Stickstoff-, Schwefel- oder Phosphoratom an eine Verbindung gebunden sind.

Der Begriff "substituiert" bedeutet, dass ein oder mehrere Substituenten vorhanden sind, die ein Wasserstoffatom an einem oder mehreren Kohlenstoffatomen des Kohlenwasserstoffgerüsts ersetzen. Beispiele für solche Substituenten sind Alkyl, Zykloalkyl, Aryl, Heteroaryl, Halogen, Hydroxyl, Phosphat, Cyano und Amino.

Ein geeignetes Gegenion ist beispielsweise das Chloridion. Es kommen aber beliebige andere Gegenionen in Frage.

Geeignete Bedingungen sind vom Fachmann leicht ermittelbar. Geeignet sind beispielsweise Temperaturen in einem Temperaturbereich von -100 °C bis +100 °C, besonders bevorzugt in einem Temperaturbereich von -50 °C bis +90 °C, -30 °C bis +80 °C, -20 °C bis +70 °C, -10 °C bis +70 °C oder -5 °C bis +70 °C, besonders bevorzugt in einem Temperaturbereich von 0 °C bis +70 °C oder 0 °C bis +66 °C durchgeführt.

Bevorzugte Lösungsmittel, in denen die Reaktion durchgeführt wird, sind zyklische und nichtzyklische aprotische Lösungsmittel, die über ein Heteroatom verfügen. Beispiele hierfür sind Tetrahydrofuran (THF), 1,4-Dioxan, Diethylether und Acetonitril. Besonders bevorzugt wird die Reaktion in Tetrahydrofuran (THF) als Lösungsmittel durchgeführt.

Vorzugsweise wird die Reaktion mit Trichlorsilan HSiCl₃ in Gegenwart eines tertiären Amins durchgeführt. Beispiele für geeignete tertiäre Amine sind Trimethylamin, Triethylamin, Tripropylamin und Tributylamin, Ein besonders bevorzugtes tertiäres Amin ist Triethylamin. Besonders bevorzugt wird das Verfahren in Gegenwart von Triethylamin in Tetrahydrofuran durchgeführt.

Besonders bevorzugt ist bei dem erfindungsgemäßen Verfahren, wenn R¹, R², R⁵, R⁶, R⁷ und R⁸ unabhängig voneinander H, substituiertes oder unsubstituiertes C₁-C₁₂-Alkyl, substituiertes oder unsubstituiertes C₃-C₁₂-Zykloalkyl, substituiertes oder unsubstituiertes C₁-C₁₂-Heteroalkyl, substituiertes oder unsubstituiertes C₅-C₁₂-Aryl oder substituiertes oder unsubstituiertes C₃-C₁₂-Heteroaryl, besonders bevorzugt H, substituiertes oder unsubstituiertes C₁-C₆-Alkyl, substituiertes oder unsubstituiertes C₃-C₆-Zykloalkyl, substituiertes oder unsubstituiertes C₁-C₆-Heteroalkyl, substituiertes oder unsubstituiertes C₅-C₆-Aryl oder substituiertes oder unsubstituiertes C₃-C₆-Heteroaryl sind. R¹ und/oder R² sind dabei nicht Phenyl. Weiter bevorzugt beträgt die Gesamtzahl der Kohlenstoffatome der Reste R¹, R², R⁵, R⁶, R⁷ und R⁸ jeweils maximal 24, 23, 22, 21, 20, 19, 18, 17, 16, 15, 14, 13, 12, 11, 10, 9, 8, 7, 6, 5, 4, 3, 2 oder 1. C₁-C₁₂, C₁-C₆ und C₃-C₁₂ bedeuten hier die jeweilige Anzahl von C-Atomen, wobei ganzzahlige Zwischenwerte ausdrücklich mit erfasst sind. C₁-C₁₂-Alkyl bedeutet daher beispielsweise ein Alkyl mit einem, zwei, drei, vier, fünf, sechs, sieben, acht, neun, zehn, elf oder zwölf C-Atomen. Weiter bevorzugt sind die Substituenten R¹, R², R⁵, R⁶, R⁷ und R⁸, bevorzugt zumindest die Substituenten R¹ und R² an den Stickstoffatomen, jeweils unabhängig H oder ein sterisch wenig anspruchsvoller Substituent, wobei unter einem "sterisch wenig anspruchsvollen Substituenten" ein Substituent mit maximal 5 C-Atomen, im Falle des Vorhandenseins von Heteroatomen 5 Atome einschließlich Heteroatomen, verstanden wird, beispielsweise ein C₁-C₅-Alkyl, d.h. ein Alkyl gemäß obiger Definition, mit 1, 2, 3, 4 oder 5 C-Atomen.

In einer besonders bevorzugten Ausführungsform ist das erfindungsgemäße Verfahren ein Verfahren zur Herstellung von
a) 1,3-Dimethylimidazolidin-2-yliden-tetrachlorsilizium(IV) gemäß Formel Ia₁ 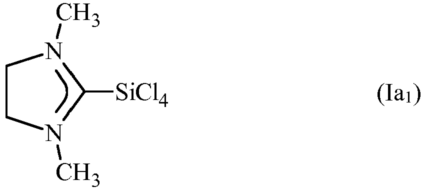 wobei 2-Chlor-1,3-Dimethylimidazoliniumchlorid gemäß Formel IIa₁ 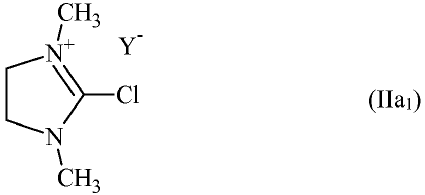 in Gegenwart eines basischen Lösungsmittels, vorzugsweise Triethylamin, mit Trichlorsilan HSiCl₃ in Reaktion gebracht wird, oder
b) 1,3-Dimethylimidazolin-2-yliden-tetrachlorsilizium(IV) gemäß Formel Ib₁ 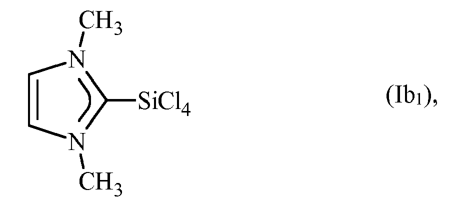 wobei 2-Chlor-1,3-Dimethylimidazoliumchlorid gemäß Formel IIb₁ 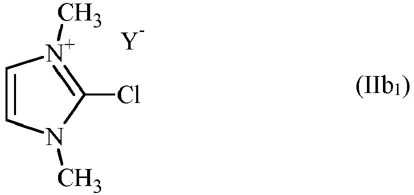 in Gegenwart eines basischen Lösungsmittels, vorzugsweise Triethylamin, mit Trichlorsilan HSiCl₃ in Reaktion gebracht wird.

In einem zweiten Aspekt betrifft die vorliegende Erfindung die Verwendung einer Verbindung gemäß der folgenden Formel Ia 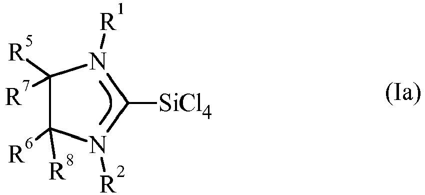 oder der folgenden Formel Ib 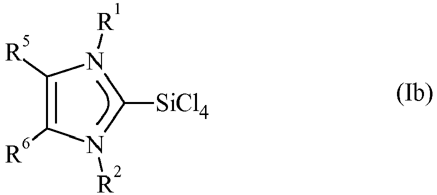 wobei
R¹ und R², unabhängig voneinander H, substituiertes oder unsubstituiertes Alkyl, substituiertes oder unsubstituiertes Zykloalkyl, substituiertes oder unsubstituiertes Heteroalkyl, substituiertes oder unsubstituiertes Aryl oder substituiertes oder unsubstituiertes Heteroaryl sind, mit der Maßgabe, dass R¹ und/oder R² nicht substituiertes oder unsubstituiertes Phenyl sind, und
R⁵, R⁶, R⁷ und R⁸ unabhängig voneinander H, substituiertes oder unsubstituiertes Alkyl, substituiertes oder unsubstituiertes Zykloalkyl, substituiertes oder unsubstituiertes Heteroalkyl, substituiertes oder unsubstituiertes Aryl oder substituiertes oder unsubstituiertes Heteroaryl sind,
zur Carbenübertragung.

Bevorzugt werden die Verbindungen gemäß Formel Ia, Ib dabei zur Herstellung eines Carbenmetallkomplexes, besonders bevorzugt eines Carben-Übergangsmetall-Komplexes verwendet. Besonders bevorzugt handelt es sich bei dem Metall in dem Carbenmetallkomplex um Nickel, Rhodium, Ruthenium, Palladium, Silber oder Kupfer.

Besonders bevorzugt wird eine Verbindung verwendet, bei der R¹, R², R⁵, R⁶, R⁷ und R⁸ unabhängig voneinander H, substituiertes oder unsubstituiertes C₁-C₁₂-Alkyl, substituiertes oder unsubstituiertes C₃-C₁₂-Zykloalkyl, substituiertes oder unsubstituiertes C₁-C₁₂-Heteroalkyl, substituiertes oder unsubstituiertes C₅-C₁₂-Aryl oder substituiertes oder unsubstituiertes C₃-C₁₂-Heteroaryl, bevorzugt H, substituiertes oder unsubstituiertes C₁-C₆-Alkyl, substituiertes oder unsubstituiertes C₃-C₆-Zykloalkyl, substituiertes oder unsubstituiertes C₁-C₆-Heteroalkyl, substituiertes oder unsubstituiertes C₅-C₆-Aryl oder substituiertes oder unsubstituiertes C₃-C₆-Heteroaryl sind, mit der Maßgabe, dass R¹ und/oder R² nicht substituiertes oder unsubstituiertes Phenyl sind.

Bevorzugt ist die zur Carbenübertragung verwendete Verbindung 1,3-Dimethylimidazolidin-2-yliden-tetrachlorsilizium(IV) gemäß Formel Ia₁ 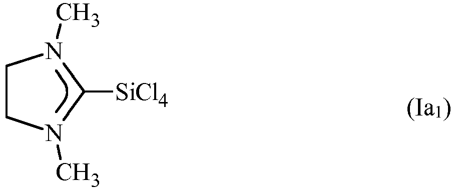 oder 1,3-Dimethylimidazolin-2-yliden-tetrachlorsilizium(IV) gemäß Formel Ib₁ 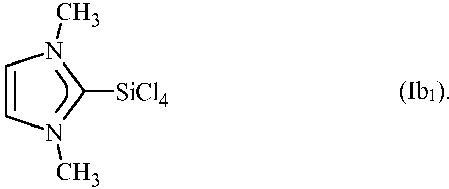 Die Erfindung wird im Folgenden allein zu Veranschaulichungszwecken anhand von Ausführungsbeispielen und Figuren näher erläutert. Es zeigt
Fig. 1: Molekülstruktur eines erfindungsgemäßen NHC-SiCl₄. Die Atome entsprechen Schwingungsellipsoiden mit 50% Wahrscheinlichkeit. Wasserstoffatome sind der Übersichtlichkeit halber nicht dargestellt. 100: Si; 103, 105, 107, 109: Cl; 111, 113: N; Alle nicht gekennzeichneten Atome sind Kohlenstoff.
Fig. 2: Molekülstruktur eines erfindungsgemäßen Ni(NHC)₂Cl₂. Die Atome entsprechen Schwingungsellipsoiden mit 50% Wahrscheinlichkeit. Wasserstoffatome sind der Übersichtlichkeit halber nicht dargestellt. 120: Ni; 123, 125: Cl; 127, 129, 131, 133: N; Alle nicht gekennzeichneten Atome sind Kohlenstoff.
Fig. 3: Molekülstruktur eines erfindungsgemäßen Pd(NHC)₂Cl₂. Die Atome entsprechen Schwingungsellipsoiden mit 50% Wahrscheinlichkeit. Wasserstoffatome sind der Übersichtlichkeit halber nicht dargestellt. 140: Pd; 143, 145: Cl; 147, 149, 151, 153: N; Alle nicht gekennzeichneten Atome sind Kohlenstoff.
Fig. 4: Molekülstruktur eines erfindungsgemäßen NHC-PCl₃. Die Atome entsprechen Schwingungsellipsoiden mit 50% Wahrscheinlichkeit. Wasserstoffatome sind der Übersichtlichkeit halber nicht dargestellt. 160: P; 163, 165, 167: Cl; 169, 171: N; Alle nicht gekennzeichneten Atome sind Kohlenstoff.
Fig. 5: Molekülstruktur eines nicht erfindungsgemäßen ADC-SiCl₄. Die Atome entsprechen Schwingungsellipsoiden mit 50% Wahrscheinlichkeit. Wasserstoffatome sind der Übersichtlichkeit halber nicht dargestellt. 200: Si; 202, 204, 206, 208: Cl; 212, 218: N; 214, 216, 220, 222: C.
Fig. 6: Molekülstruktur eines nicht erfindungsgemäßen ADC-PCl₃. Die Atome entsprechen Schwingungsellipsoiden mit 50% Wahrscheinlichkeit. Wasserstoffatome sind der Übersichtlichkeit halber nicht dargestellt. 240: P; 242, 244, 246: Cl; 250, 256: N; 252, 254, 258, 260: C.

### Beispiel 1 NHC-Liganden

### 1.1 Darstellung von 1,3-Dimethylimidazolidin-2-yliden-tetrachlorsilizium(IV)

Die Darstellung von 1,3-Dimethylimidazolidin-2-yliden-tetrachlorsilizium(IV) erfolgte durch Reaktion von 2-Chlor-1,3-dimethylimidazoliniumchlorid mit Trichlorsilan (HSiCl₃) in Gegenwart von Triethylamin (NEt₃) in Tetrahydrofuran (THF) nach folgendem Schema:

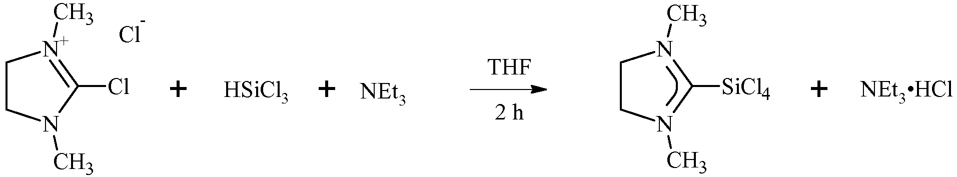

In einem 500-mL-Zweihalskolben mit Magnetrührstab und Stickstoff-Bypass wurden 7,26 g 2-Chlor-1,3-dimethylimidazoliniumchlorid (42,95 mmol) in 120 mL THF suspendiert vorgelegt und mit einem Eisbad auf 0 °C gekühlt. Es wurden direkt 4,13 g Triethylamin (40,81 mmol) hinzugegeben. Eine Lösung von 5,52 g Trichlorsilan (40,75 mmol) in 15 mL THF wurde mit einer Spritze durch ein Septum innerhalb von 30 Minuten hinzugetropft. Nach 30 weiteren Minuten wurde das Eisbad entfernt und das Reaktionsgemisch weitere 60 Minuten gerührt. Alle flüchtigen Bestandteile wurden dann am Ölpumpenvakuum entfernt und der verbleibende Rückstand zweimal mit 20 mL Methyl-tert-butylether und zweimal mit 20 mL Diethylether gewaschen und anschließend am Ölpumpenvakuum getrocknet.

Ausbeute: 9,61 g (83 %). Farbloser Feststoff. Schmelzpunkt: Zersetzung ab 100 °C. NMR (CD₃CN, δ ppm): ¹H: 3.39 (s, 6H, -CH₃), 3.76 (s, 4H, -CH₂-CH₂-); ¹³C: 35.93 (s, -CH₃), 52.43 (s, -CH₂-CH₂-), 173.10 (s, carbene-C); ²⁹Si: -103.78 (s);

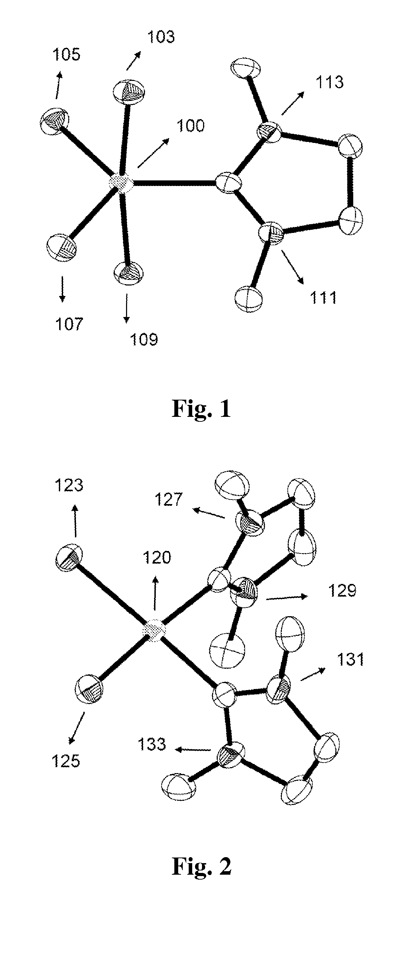

Die aus kristallographischen Messungen abgeleitete Molekülstruktur von 1,3-Dimethyl-imidazolidin-2-yliden-tetrachlorsilizium(IV) ist in Fig. 1 dargestellt. Die Atome entsprechen Schwingungsellipsoiden mit 50% Wahrscheinlichkeit. Wasserstoffatome sind der Übersichtlichkeit halber nicht dargestellt. Das Siliziumatom ist mit der Bezugsziffer 100 gekennzeichnet, Chloratome sind mit den Bezugsziffern 103, 105, 107 und 109, Stickstoffatome sind mit den Bezugsziffern 111 und 113 gekennzeichnet. Alle nicht gekennzeichneten Atome sind Kohlenstoff.

### 1.2 Transmetallation an Nickel und Palladium

Als ein Beispiel für die Verwendung des erfindungsgemäß hergestellten Carben-Übertragungsreagenzes zur Herstellung von Übergangsmetall-Carben-Komplexen wurden Nickel- und Palladium-Carben-Komplexe mit 1,3-Dimethylimidazolidin-2-yliden-tetrachlor-silizium(IV) als NHC hergestellt. Der 1,3-Dimethylimidazolidin-2-yliden-Rest wird im Folgenden mit NHC abgekürzt.

Das entstandene Siliziumtetrachlorid wurde im Vakuum entfernt. Der verbleibende Feststoff wurde durch Kristallisation (Ausfrieren aus einer Lösung in Acetonitril bei -40 °C) als reiner Feststoff erhalten. Verbliebenes Triphenylphosphin (PPh₃) wurde durch Waschen mit Diethylether abgetrennt.

### 1.2.1 Synthese von Ni(NHC)₂Cl₂:

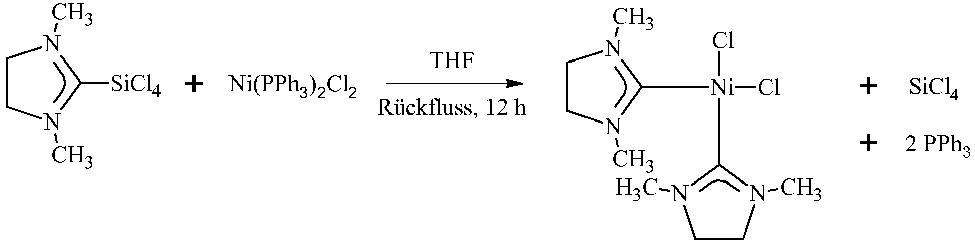

In einem 250-mL-Zweihalskolben mit aufgesetztem Rückflusskühler, Magnetrührstab und Stickstoff-Bypass wurden 3,51 g NHC-SiCl₄ (13,08 mmol) in 80 mL Tetrahydrofuran vorgelegt. 2,67 g Ni(PPh₃)₂Cl₂ (5,89 mmol) wurden als Feststoff hinzu gegeben. Das Reaktionsgemisch wurde 12 Stunden unter Rühren am Rückfluss gekocht. Nach dem Abkühlen wurden alle flüchtigen Bestandteile im Ölpumpenvakuum entfernt. Der Rückstand wurde gründlich mit Diethylether gewaschen und anschließend in heißem Acetonitril gelöst und bei -35 °C auskristallisiert. Die überstehende Lösung wurde abdekantiert und das Produkt mit Diethylether gewaschen und im Ölpumpenvakuum getrocknet.

Ausbeute: 1,56 g (73 % bezogen auf NHC-SiCl₄). Orange-brauner, kristalliner Feststoff. Schmelzpunkt: Zersetzung ab 200 °C.

Kristallographische Messungen ergaben die in Fig. 2 dargestellte Molekülstruktur von Ni(NHC)₂Cl₂. Die Atome entsprechen Schwingungsellipsoiden mit 50% Wahrscheinlichkeit. Wasserstoffatome sind der Übersichtlichkeit halber nicht dargestellt. Das Nickelatom ist mit der Bezugsziffer 120 gekennzeichnet. Chloratome sind mit den Bezugsziffern 123 und 125, Stickstoffatome mit den Bezugsziffern 127, 129, 131 und 133 gekennzeichnet. Alle nicht gekennzeichneten Atome sind Kohlenstoff.

### 1.2.2 Synthese von Pd(NHC)₂Cl₂:

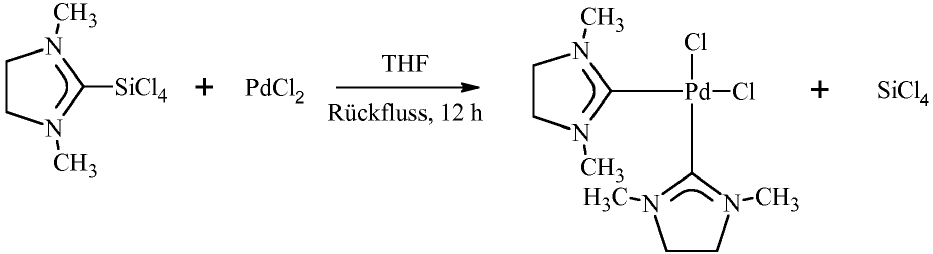

In einem 250-mL-Zweihalskolben mit aufgesetztem Rückflusskühler, Magnetrührstab und Stickstoff-Bypass wurden 2,54 g NHC-SiCl₄ (9,48 mmol) in 80 mL Tetrahydrofuran vorgelegt. 0,93 g PdCl₂ (5,24 mmol) wurden als Feststoff hinzugegeben. Das Reaktionsgemisch wurde 12 Stunden unter Rühren am Rückfluss gekocht. Nach dem Abkühlen wurden alle flüchtigen Bestandteile im Ölpumpenvakuum entfernt. Der verbliebene Feststoff wurde mit Dichlormethan aufgenommen und über Celite filtriert. Nach Entfernen des Lösungsmittels wurde das Rohprodukt aus Acetonitril bei -40 °C umkristallisiert. Die überstehende Lösung wurde abdekantiert und das Produkt mit Diethylether gewaschen und im Ölpumpenvakuum getrocknet.

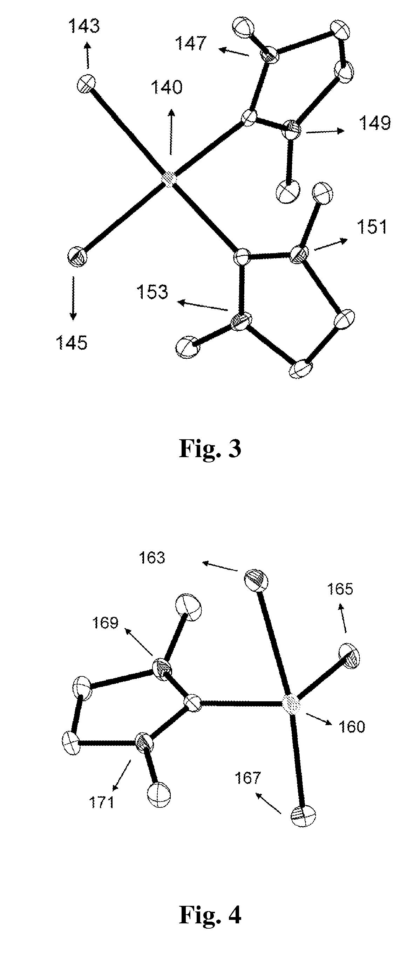

Ausbeute: 1,31 g (74 % bezogen auf NHC-SiCl₄). Hellgelber, kristalliner Feststoff. Schmelzpunkt: Zersetzung ab 220 °C. NMR (CDCl₃, δ ppm): ¹H: 3.47 (s, 6H, -CH₃), 3.52 (s,-CH₂-CH₂-); ¹³C: 36.50 (s, -CH₃), 51.30 (s, -CH₂-CH₂-), 198.33 (s, carbene-C);
Kristallographische Messungen ergaben die in Fig. 3 dargestellte Molekülstruktur von Pd(NHC)₂Cl₂. Die Atome entsprechen Schwingungsellipsoiden mit 50% Wahrscheinlichkeit. Wasserstoffatome sind der Übersichtlichkeit halber nicht dargestellt. Das Palladiumatom ist mit der Bezugsziffer 140 gekennzeichnet. Die Bezugsziffern 143 und 145 kennzeichnen Chloratome, die Bezugsziffern 147, 149, 151 und 153 Stickstoffatome. Alle nicht gekennzeichneten Atome sind Kohlenstoff.

### 1.3 Carben-Übertragung auf Nichtmetallverbindungen

Die Übertragung von Carben findet auch an Nichtmetallverbindungen statt. Als Modell dient Phosphor(III)-chlorid:

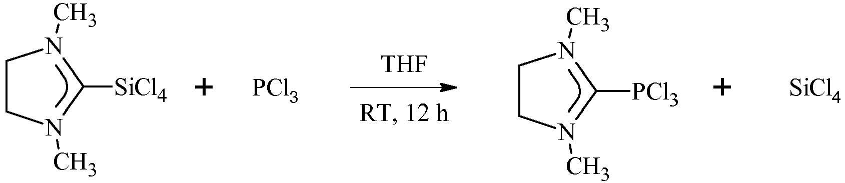

In einem 100-mL-Zweihals-Rundkolben mit Magnetrührstab und Stickstoff-Bypass wurden 1,32 g NHC-SiCl₄ (4,92 mmol) in 40 mL Tetrahydrofuran vorgelegt und im Eisbad gekühlt. Eine Lösung von 0,74 g PCl₃ (5,39 mmol) in 15 mL Tetrahydrofuran wurde langsam durch ein Septum hinzugetropft. Die Lösung wurde über 12 Stunden gerührt, während sie wieder Raumtemperatur erreichte. Es wurden alle flüchtigen Bestandteile im Ölpumpenvakuum entfernt und der verbleibende Rückstand wurde dreimal mit je 10 mL Diethylether gewaschen und anschließend im Ölpumpenvakuum getrocknet.

Ausbeute: 1,15 g (100 %). Farbloser Feststoff. Schmelzpunkt: Zersetzung ab 70 °C. NMR (CD₃CN, δ ppm): ¹H: 3.37 (s, 6H, -CH₃), 3.79 (s, 4H, -CH₂-CH₂-); ³¹P: 24.61 (s); ¹³C: 35.93 (s, -CH₃), 36.09 (s, -CH₃) 52.56 (s, -CH₂-CH₂-), 172.89 (d, carbene-C, ¹*J*_{CP} = 109.3 Hz);
Kristallographische Messungen ergaben die in Fig. 4 dargestellte Molekülstruktur von NHC-PCl₃. Die Atome entsprechen Schwingungsellipsoiden mit 50% Wahrscheinlichkeit. Wasserstoffatome sind der Übersichtlichkeit halber nicht dargestellt. Das Phosphoratom ist mit der Bezugsziffer 160 gekennzeichnet, die Bezugsziffern 163, 165 und 167 kennzeichnen Chloratome, und die Bezugsziffern 169 und 171 Stickstoffatome. Alle nicht gekennzeichneten Atome sind Kohlenstoff.

### Beispiel 2: ADC-Liganden (nicht gemäß der Erfindung)

Die Darstellung von ADC-Liganden erfolgte analog zur oben beschriebenen Herstellung der NHC-Liganden.

### 2.1. Darstellung von C₅H₁₂N₂SiCl₄

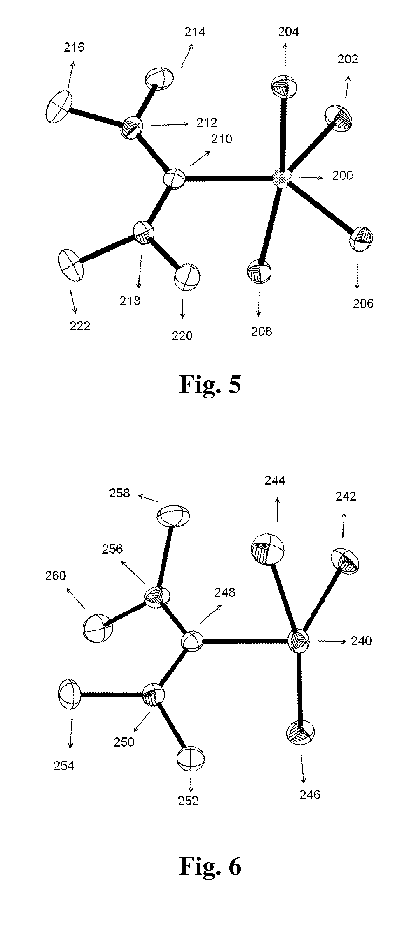

Die Darstellung von C₅H₁₂N₂SiCl₄ erfolgte analog zur oben beschriebenen Herstellung der entsprechenden NHC-Liganden (s. 1.1). Kristallographische Messungen ergaben die in Fig. 5 dargestellte Molekülstruktur von C₅H₁₂N₂SiCl₄. Die Atome entsprechen Schwingungsellipsoiden mit 50% Wahrscheinlichkeit. Wasserstoffatome sind der Übersichtlichkeit halber nicht dargestellt. Das Siliziumatom ist mit der Bezugsziffer 200 gekennzeichnet, die Bezugsziffern 202, 204, 206 und 208 kennzeichnen Chloratome, die Bezugsziffern 212 und 218 Stickstoffatome, die Bezugsziffern 214, 216, 220 und 222 Kohlenstoffatome.

Mᵣ = 270.06. Farbloser Feststoff. ¹H NMR (CD₃CN) δ = 3.30 (s, 12H, -CH₃). ¹³C{H} NMR (CD₃CN) δ = 44.3 (s, -CH₃), 183.5 (s, carbene-C). ²⁹Si NMR (CD₃CN) δ = -101.6 (s). Elementaranalyse (%) ermittelt für [C₅H₁₂N₂SiCl₄] (270.06): C 22.24. H 4.48. N 10.37. Gefunden: C 22.36. H 4.51. N 10.43. Kristallisation: Diffusion von Diethylether in eine Lösung von ADC-SiCl₄ in Acetonitril.

### 2.2 Carben-Übertragung auf Nichtmetallverbindungen

Die Übertragung an Nichtmetallverbindungen wie Phosphor(III)-chlorid wurde analog zu dem oben (1.3) für NHC beschriebenen Verfahren durchgeführt. Kristallographische Messungen ergaben die in Fig. 6 dargestellte Molekülstruktur des ADC-PCl₃ C₅H₁₂N₂PCl₃. Die Atome entsprechen Schwingungsellipsoiden mit 50% Wahrscheinlichkeit. Wasserstoffatome sind der Übersichtlichkeit halber nicht dargestellt. Das Phosphoratom ist mit der Bezugsziffer 240 gekennzeichnet, die Bezugsziffern 242, 244 und 246 kennzeichnen Chloratome, die Bezugsziffern 250 und 256 Stickstoffatome, und die Bezugsziffern 252, 254, 258 und 260 kennzeichnen Kohlenstoffatome.

Mᵣ = 237.49. Farbloser Feststoff. ¹H NMR (CD₃CN) δ = 3.33 (s, 12H, -CH₃). ³¹P{¹H} NMR (CD₃CN) δ = 51.0 (s). Kristallisation: Diffusion von Diethylether in eine Lösung von ADC-PCl₃ in Acetonitril.

### Literatur

[1] Arduengo III, A. J., Harlow, R. L., Kline, M., J. Am. Chem. Soc. 1991, 113, 363-365.
[2] Herrmann, W. A., Köcher, C., Angew. Chem. 1997, 109, 2256-2282.
[3] Hahn, F.E., Jahnke, M. C., Angew. Chem., Int. Ed. 2008, 47, 3122-3172.
[4] Hindi, K. H., Panzner, M. J., Tessier, C. A., Cannon, C. L., Youngs, W. J., Chem. Rev. 2009, 109, 3859-3884.
[5] Arduengo III, A. J., Acc. Chem. Res., 1999, 32, 913-921.
[6] Kuhn, N., Al-Sheikh, A., Coord. Chem. Rev. 2005, 249, 829-857.
[7] Diez-Gonzales, S., Marion, N., Nolan, S. P., Chem. Rev. 2009, 109, 3612-3676.
[8] Vougioukalakis, G. C, Grubbs, R. H., Chem. Rev. 2010, 110, 1746-1787.
[9] Herrmann, W. A, Elison, M., Fischer, J., Köcher, C., Artus, G. R. J., Angew. Chem. Int. Ed. 1995, 34, 2371-2373.
[10] Dörwald, F. Z., Metal Carbenes in Organic Synthesis 1999, Wiley-VCH.
[11] Glorius, F. N-Heterocyclic Carbenes in Transition Metal Catalysis; Topics in Organometallic Chemistry 2007, Vol. 21; Springer-Verlag.
[12] Cazin, C. S. J., N-Heterocyclic Carbenes in Transition Metal Catalysis and Organocatalysis; Catalysis by Metal Complexes 2011, Vol. 32, Springer-Verlag.
[13] Wang, H. M. J., Un, I. J. B., Organometallics 1998, 17, 972-975.
[14] Garrison, J. C., Youngs, W. J., Chem. Rev. 2005, 105, 3978-4008.
[15] Alder, R. W., Allen, P. R., Murray, M., Orpen, A. G., Bis(diisopropylamino)carben, Angew. Chem. 1996, 108, 1211; Angew. Chem. Int. Ed. Engl. 1996, 35, 1221.
[16] Boyarskiya, V. P., Luzyanina K. V., Kukushkina, V.Y., Acyclic diaminocarbenes (ADCs) as a promising alternative to N-heterocyclic carbenes (NHCs) in transition metal catalyzed organic transformations, Coord. Chem. Rev. 2012, 256, 2029-2056.
[17] Ghadwal, R.S., Roesky, H.W., Merkel, S., Henn, J., Stalke, D., Lewis Base Stabilized Dichlorosilylene, Angew. Chem. 2009, 121, 5793-5796.
[18] Kuhn, N., Kratz, T., Bläser, D. and Boese, R. (1995), Derivate des Imidazols, XIII. Carben-Komplexe des Siliciums und Zinns. Chem. Ber., 128: 245-250. doi: 10.1002/cber.19951280307.
[19] Ogata, K., Yamaguchi, Y., Kashiwabara, T., Ito, T. (2005), The reaction of amidinato(pyridine) complexes of molybdenum and tungsten with triethylborane adduct of N-heterocyclic carbene (NHC·BEt3): Investigation on the reactivity of NHC·BEt3 as carbene precursor toward transition metal complexes, Journal of Organometallic Chemistry 690, 5701-5709.
[20] Böttcher, T., Bassil, B.S., Röschenthaler, G.-V. (2012), Complexes of Ge(IV)- and Sn(IV)-Fluorides with Cyclic and Acyclic Carbenes: Bis(dialkylamino)-difluoromethylenes as Carbene Sources, Inorganic Chemistry 51, 763-765, DOI: 10.1021/ic202008m

## Patentansprüche

1. Verfahren zur Herstellung einer Verbindung gemäß der folgenden Formel Ia 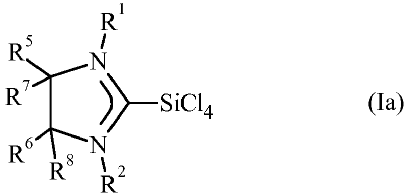 oder einer Verbindung gemäß der folgenden Formel Ib 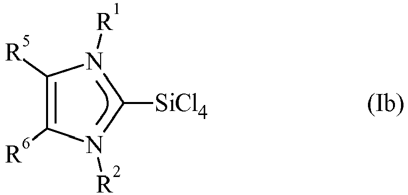 wobei
R¹ und R², unabhängig voneinander H, substituiertes oder unsubstituiertes Alkyl, substituiertes oder unsubstituiertes Zykloalkyl, substituiertes oder unsubstituiertes Heteroalkyl, substituiertes oder unsubstituiertes Aryl oder substituiertes oder unsubstituiertes Heteroaryl sind, mit der Maßgabe, dass R¹ und/oder R² nicht substituiertes oder unsubstituiertes Phenyl sind, und
R⁵, R⁶, R⁷ und R⁸ unabhängig voneinander H, substituiertes oder unsubstituiertes Alkyl, substituiertes oder unsubstituiertes Zykloalkyl, substituiertes oder unsubstituiertes Heteroalkyl, substituiertes oder unsubstituiertes Aryl oder substituiertes oder unsubstituiertes Heteroaryl sind,
wobei
a) zur Herstellung der Verbindung gemäß der folgenden Formel Ia 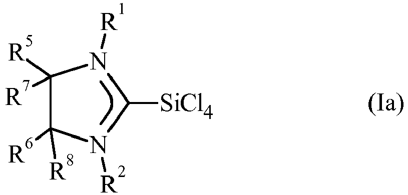 eine Verbindung der folgenden Formel IIa 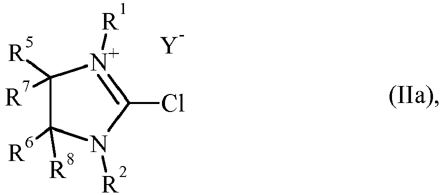 wobei R¹, R², R⁵, R⁶, R⁷ und R⁸ wie oben definiert sind und Y⁻ ein geeignetes Gegenion ist, unter geeigneten Bedingungen mit Trichlorsilan HSiCl₃ in Reaktion gebracht wird, oder
b) zur Herstellung der Verbindung der folgenden Formel Ib 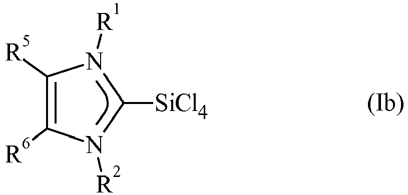 eine Verbindung der folgenden Formel IIb 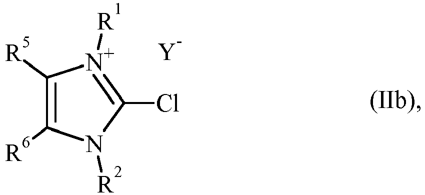 wobei R¹, R², R⁵ und R⁶ wie oben definiert sind und Y⁻ ein geeignetes Gegenion ist, unter geeigneten Bedingungen mit Trichlorsilan HSiCl₃ in Reaktion gebracht wird.

2. Verfahren nach Anspruch 1, **dadurch gekennzeichnet, dass** R¹, R², R⁵, R⁶, R⁷ und R⁸ unabhängig voneinander H, substituiertes oder unsubstituiertes C₁-C₁₂-Alkyl, substituiertes oder unsubstituiertes C₃-C₁₂-Zykloalkyl, substituiertes oder unsubstituiertes C₁-C₁₂-Heteroalkyl, substituiertes oder unsubstituiertes C₅-C₁₂-Aryl oder substituiertes oder unsubstituiertes C₃-C₁₂-Heteroaryl, bevorzugt H, substituiertes oder unsubstituiertes C₁-C₆-Alkyl, substituiertes oder unsubstituiertes C₃-C₆-Zykloalkyl, substituiertes oder unsubstituiertes C₁-C₆-Heteroalkyl, substituiertes oder unsubstituiertes C₅-C₆-Aryl oder substituiertes oder unsubstituiertes C₃-C₆-Heteroaryl sind, mit der Maßgabe, dass R¹ und/oder R² nicht substituiertes oder unsubstituiertes Phenyl sind.

3. Verfahren nach einem der Ansprüche 1 oder 2 zur Herstellung von
a) 1,3-Dimethylimidazolidin-2-yliden-tetrachlorsilizium(IV) gemäß Formel Ia₁ 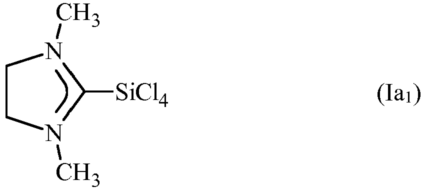 wobei 2-Chlor-1,3-Dimethylimidazoliniumchlorid gemäß Formel IIa₁ 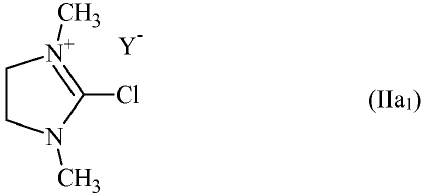 in Gegenwart von Triethylamin mit Trichlorsilan HSiCl₃ in Reaktion gebracht wird, oder
b) 1,3-Dimethylimidazolin-2-yliden-tetrachlorsilizium(IV) gemäß Formel Ib₁ 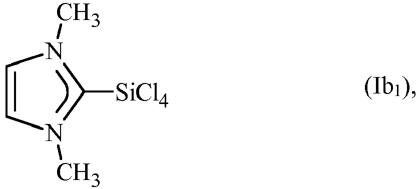 wobei 2-Chlor-1,3-Dimethylimidazoliumchlorid gemäß Formel IIb₁ 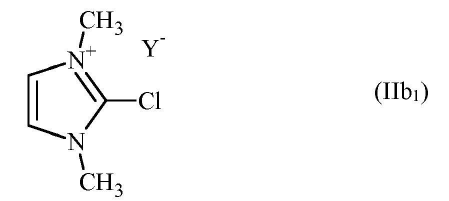 in Gegenwart von Triethylamin mit Trichlorsilan HSiCl₃ in Reaktion gebracht wird.

4. Verwendung einer Verbindung gemäß der folgenden Formel Ia 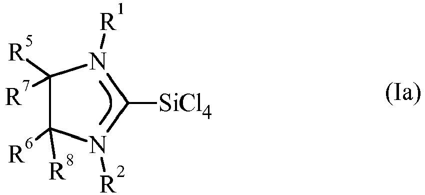 oder der folgenden Formel Ib 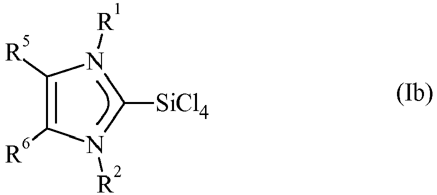 wobei
R¹ und R², unabhängig voneinander H, substituiertes oder unsubstituiertes Alkyl, substituiertes oder unsubstituiertes Zykloalkyl, substituiertes oder unsubstituiertes Heteroalkyl, substituiertes oder unsubstituiertes Aryl oder substituiertes oder unsubstituiertes Heteroaryl sind, mit der Maßgabe, dass R¹ und/oder R² nicht substituiertes oder unsubstituiertes Phenyl sind, und
R⁵, R⁶, R⁷ und R⁸ unabhängig voneinander H, substituiertes oder unsubstituiertes Alkyl, substituiertes oder unsubstituiertes Zykloalkyl, substituiertes oder unsubstituiertes Heteroalkyl, substituiertes oder unsubstituiertes Aryl oder substituiertes oder unsubstituiertes Heteroaryl sind, zur Carbenübertragung.

5. Verwendung nach Anspruch 4, **dadurch gekennzeichnet, dass** R¹, R², R⁵, R⁶, R⁷ und R⁸ unabhängig voneinander H, substituiertes oder unsubstituiertes C₁-C₁₂-Alkyl, substituiertes oder unsubstituiertes C₃-C₁₂-Zykloalkyl, substituiertes oder unsubstituiertes C₁-C₁₂-Heteroalkyl, substituiertes oder unsubstituiertes C₅-C₁₂-Aryl oder substituiertes oder unsubstituiertes C₃-C₁₂-Heteroaryl, bevorzugt H, substituiertes oder unsubstituiertes C₁-C₆-Alkyl, substituiertes oder unsubstituiertes C₃-C₆-Zykloalkyl, substituiertes oder unsubstituiertes C₁-C₆-Heteroalkyl, substituiertes oder unsubstituiertes C₅-C₆-Aryl oder substituiertes oder unsubstituiertes C₃-C₆-Heteroaryl sind, mit der Maßgabe, dass R¹ und/oder R² nicht substituiertes oder unsubstituiertes Phenyl sind.

6. Verwendung nach einem der Ansprüche 4 oder 5, wobei die Verbindung 1,3-Dimethylimidazolidin-2-yliden-tetrachlorsilizium(IV) gemäß Formel Ia₁ 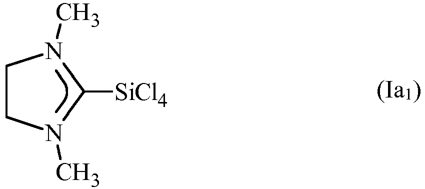 oder 1,3-Dimethylimidazolin-2-yliden-tetrachlorsilizium(IV) gemäß Formel Ib₁ 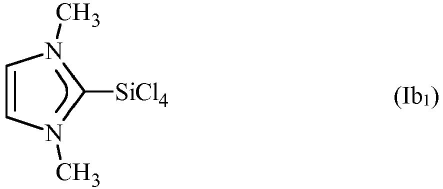 ist.

7. Verwendung nach einem der Ansprüche 4 bis 6 zur Herstellung eines Carbenmetallkomplexes.

8. Verwendung nach Anspruch 7, **dadurch gekennzeichnet, dass** es sich bei dem Metall in dem Carbenmetallkomplex um Nickel, Rhodium, Ruthenium, Palladium, Silber oder Kupfer handelt.

## Claims

1. A method for the production of a compound according to the following formula Ia 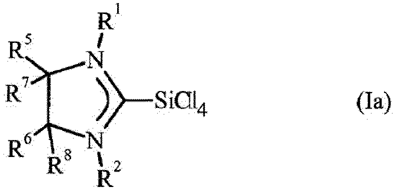 or a compound according to the following formula Ib 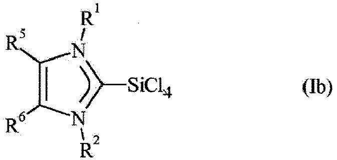 wherein
R¹ and R² are, independently of one another, H, substituted or unsubstituted alkyl, substituted or unsubstituted cycloalkyl, substituted or unsubstituted heteroalkyl, substituted or unsubstituted aryl or substituted or unsubstituted heteroaryl, with the provision that R¹ and/or R² are not substituted or unsubstituted phenyl, and
R⁵, R⁶, R⁷, and R⁸, independently of one another, are H, substituted or unsubstituted alkyl, substituted or unsubstituted cycloalkyl, substituted or unsubstituted heteroalkyl, substituted or unsubstituted aryl or substituted or unsubstituted heteroaryl,
wherein
a) for the production of the compound according to the following formula Ia 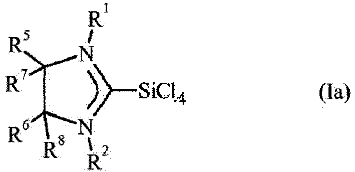 a compound according to the following formula IIa 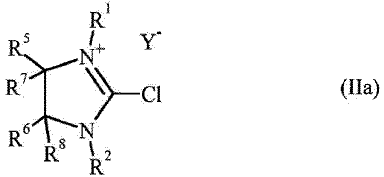 wherein R¹, R² R⁵, R⁶, R⁷ and R⁸ are as defined above and Y⁻ is a suitable counterion, is made to react with trichlorosilane HSiCl₃ under appropriate conditions, or
b) for the production of the compound according to the following formula Ib 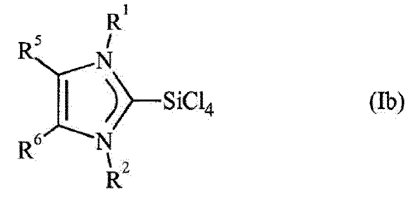 a compound according to the following formula IIb 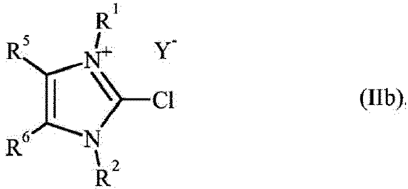 wherein R¹, R² R⁵, and R⁶ are as defined above and Y⁻ is a suitable counterion, is made to react with trichlorosilane HSiCl₃ under appropriate conditions.

2. The method according to claim 1, **characterized in that** R¹, R² R⁵, R⁶, R⁷ and R⁸ are independently of one another, H, substituted or unsubstituted C₁-C₁₂-alkyl, substituted or unsubstituted C₃-C₁₂-cycloalkyl, substituted or unsubstituted C₁-C₁₂-heteroalkyl, substituted or unsubstituted C₅-C₁₂-aryl or substituted or unsubstituted C₃-C₁₂-heteroaryl, preferably H, substituted or unsubstituted C₁-C₆-alkyl, substituted or unsubstituted C₃-C₆-cycloalkyl, substituted or unsubstituted C₁-C₆-heteroalkyl, substituted or unsubstituted C₅-C₆-aryl or substituted or unsubstituted C₃-C₆-heteroaryl, with the provision that R¹ and/or R² are not substituted or unsubstituted phenyl.

3. The method according to one of the claims 1 or 2 for the production of
a) 1,3-dimethylimidazolidin-2-yliden-tetrachlorosilicium (IV) according to the following formula Ia₁ 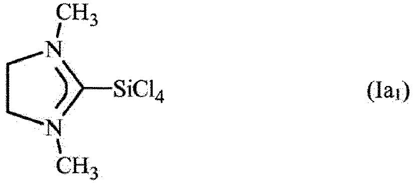 wherein 2-chloro-1,3-dimethylimidazolidiniumchloride according to the following formula IIa₁ 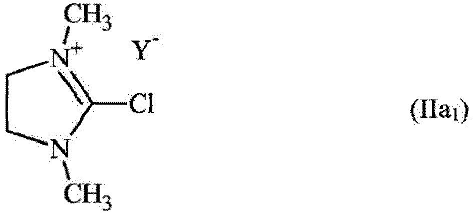 is made to react with trichlorosilane HSiCl₃ in the presence of triethylamine, or
b) 1,3-dimethylimidazolin-2-yliden-tetrachlorosilicium(IV) according to the following formula Ib₁ 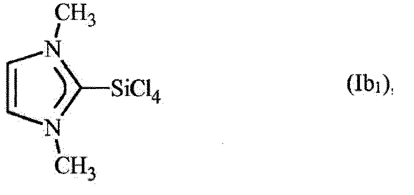 wherein 2-chloro-1,3-dimethylimidazoliumchloride of the following formula IIb₁ 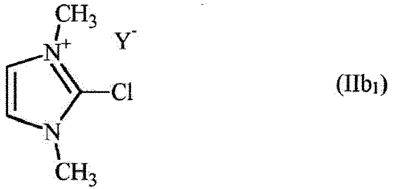 is made to react with trichlorosilane HSiCl₃ in the presence of triethylamine.

4. A use of a compound according to the following formula Ia 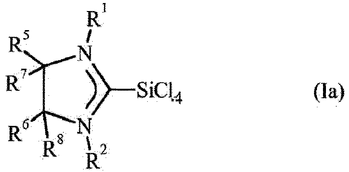 or according to the following formula Ib 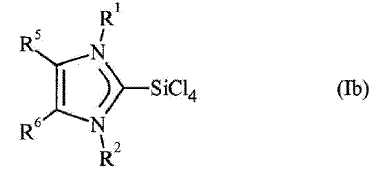 wherein
R¹ and R² are, independently of one another, H, substituted or unsubstituted alkyl, substituted or unsubstituted cycloalkyl, substituted or unsubstituted heteroalkyl, substituted or unsubstituted aryl or substituted or unsubstituted heteroaryl, with the provision that R¹ and/or R² are not substituted or unsubstituted phenyl, and
R⁵, R⁶, R⁷, and R⁸ are, independently of one another, H, substituted or unsubstituted alkyl, substituted or unsubstituted cycloalkyl, substituted or unsubstituted heteroalkyl, substituted or unsubstituted aryl or substituted or unsubstituted heteroaryl, for carbene transfer.

5. The use according to claim 4, **characterized in that** R¹, R² R⁵, R⁶, R⁷ and R⁸ are independently of one another, H, substituted or unsubstituted C₁-C₁₂-alkyl, substituted or unsubstituted C₃-C₁₂-cycloalkyl, substituted or unsubstituted C₁-C₁₂-heteroalkyl, substituted or unsubstituted C₅-C₁₂-aryl or substituted or unsubstituted C₃-C₁₂-heteroaryl, preferably H, substituted or unsubstituted C₁-C₆-alkyl, substituted or unsubstituted C₃-C₆-cycloalkyl, substituted or unsubstituted C₁-C₆-heteroalkyl, substituted or unsubstituted C₅-C₆-aryl or substituted or unsubstituted C₃-C₆-heteroaryl, with the provision that R¹ and/or R² are not substituted or unsubstituted phenyl.

6. The use according to one of the claims 4 or 5, wherein the compound is 1,3-dimethylimidazolidin-2-yliden-tetrachlorosilicium(IV) according to the formula Ia₁ 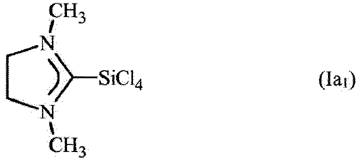 or 1,3-dimethylimidazolin-2-yliden-tetrachlorosilicium(IV) according to the formula Ib₁.

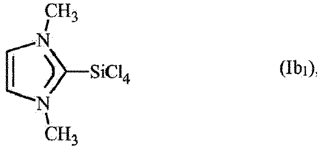

7. The use according to one of the claims 4 to 6 for the fabrication of a carbene-metal complex.

8. The use according to claim 7, **characterized in that** the metal in the carbene-metal complex is nickel, rhodium, ruthenium, palladium, silver or copper.

## Revendications

1. Procédé pour la fabrication d'un composé selon la formule Ia suivante 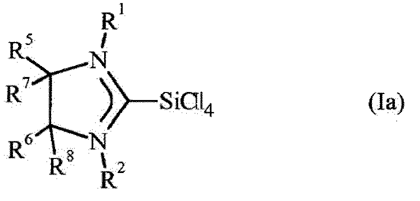 ou d'un composé selon la formule Ib suivante 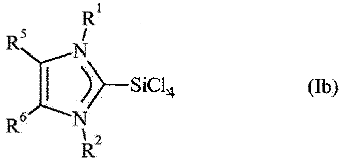 où
R¹ et R² sont, indépendamment l'un de l'autre, H, un groupe alkyle substitué ou non substitué, un groupe cykloalkyle substitué ou non substitué, un groupe hétéroalkyle substitué ou non substitué, un groupe aryle substitué ou non substitué ou un groupe hétéroaryle substitué ou non substitué, à condition que R¹ et/ou R² ne soient pas un groupe phényle substitué ou non substitué, et
R⁵, R⁶, R⁷ et R⁸ sont, indépendamment les uns des autres, H, un groupe alkyle substitué ou non substitué, un groupe cykloalkyle substitué ou non substitué, un groupe hétéroalkyle substitué ou non substitué, un groupe aryle substitué ou non substitué ou un groupe hétéroaryle substitué ou non substitué,
où
a) pour la fabrication du composé selon la formule Ia suivante 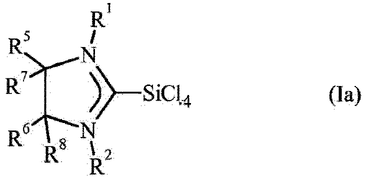 un composé selon la formule IIa suivante 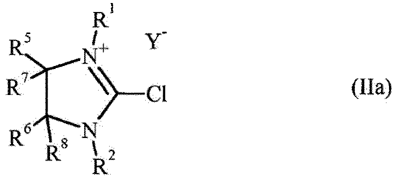 où R¹, R² R⁵, R⁶, R⁷ et R⁸ sont tels que définis ci-dessus et Y⁻ est un contre-ion approprié, est mis à réagir dans des conditions appropriées avec du trichlorosilane HSiCl₃, ou
b) pour la fabrication du composé selon la formule Ib suivante 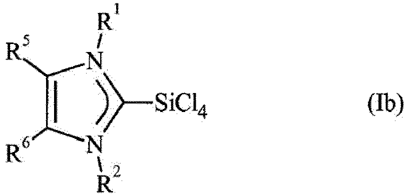 un composé selon la formule IIb suivante 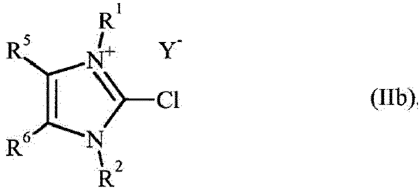 où R¹, R² R⁵, et R⁶ sont tels que définis ci-dessus et Y⁻ est un contre-ion approprié, est mis à réagir dans des conditions appropriées avec du trichlorosilane HSiCl₃.

2. Procédé selon la revendication 1, **caractérisé en ce que** R¹, R² R⁵, R⁶, R⁷ et R⁸ sont, indépendamment l'un de l'autre, H, un groupe alkyle C₁-C₁₂ substitué ou non substitué, un groupe cykloalkyle C₃-C₁₂ substitué ou non substitué, un groupe hétéroalkyle C₁-C₁₂ substitué ou non substitué, un groupe aryle C₅-C₁₂ substitué ou non substitué ou un groupe hétéroaryle C₃-C₁₂ substitué ou non substitué, de préférence H, un groupe alkyle C₁-C₆ substitué ou non substitué, un groupe cykloalkyle C₃-C₆ substitué ou non substitué, un groupe hétéroalkyle C₁-C₆ substitué ou non substitué, un groupe aryle C₅-C₆ substitué ou non substitué ou un groupe hétéroaryle C₃-C₆ substitué ou non substitué, à condition que R¹ et/ou R² ne soient pas un groupe phényle substitué ou non substitué.

3. Procédé selon l'une quelconque des revendications 1 ou 2 pour la fabrication de
a) 1,3-dimethylimidazolidin-2-yliden-tetrachlorosilicium (IV) selon la formule Ia₁ 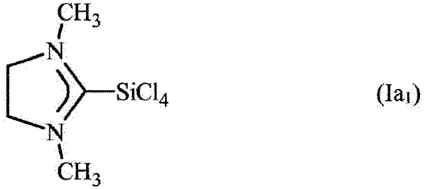 où du chlorure de 2-chloro-1,3-dimethylimidazolidinium selon la formule IIa₁ 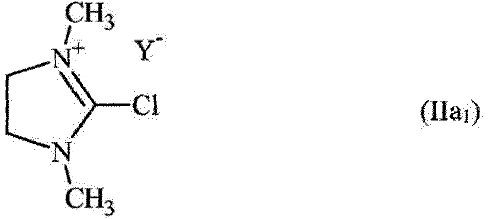 est mis à réagir avec du trichlorosilane HSiCl₃ en présence de thiéthylamine.
b) 1,3-dimethylimidazolin-2-yliden-tetrachlorosilicium(IV) selon la formule Ib₁ suivante 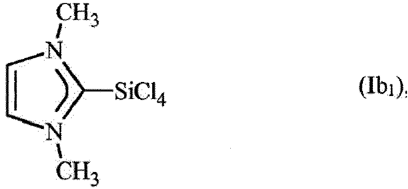 où du chlorure de 2-chloro-1,3-dimethylimidazolium selon la formule IIb₁ 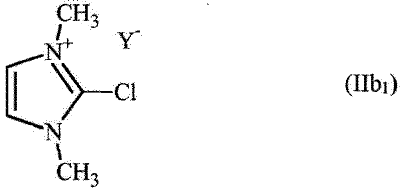 est mis à réagir avec du trichlorosilane HSiCl₃ en présence de thiéthylamine.

4. Utilisation d'un composé selon la formule Ia 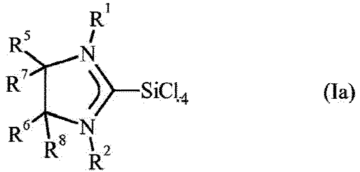 ou selon la formule Ib suivante 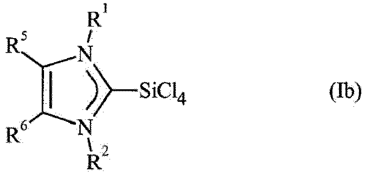 où
R¹ et R² sont, indépendamment l'un de l'autre, H, un groupe alkyle substitué ou non substitué, un groupe cykloalkyle substitué ou non substitué, un groupe hétéroalkyle substitué ou non substitué, un groupe aryle substitué ou non substitué ou un groupe hétéroaryle substitué ou non substitué, à condition que R¹ et/ou R² ne soient pas un groupe phényle substitué ou non substitué, et
R⁵, R⁶, R⁷ et R⁸ sont, indépendamment les uns des autres, H, un groupe alkyle substitué ou non substitué, un groupe cykloalkyle substitué ou non substitué, un groupe hétéroalkyle substitué ou non substitué, un groupe aryle substitué ou non substitué ou un groupe hétéroaryle substitué ou non substitué, pour le transfert de carbène.

5. Utilisation selon la revendication 4, **caractérisée en ce que** R¹, R² R⁵, R⁶, R⁷ et R⁸ sont, indépendamment l'un de l'autre, H, un groupe alkyle C₁-C₁₂ substitué ou non substitué, un groupe cykloalkyle C₃-C₁₂ substitué ou non substitué, un groupe hétéroalkyle C₁-C₁₂ substitué ou non substitué, un groupe aryle C₅-C₁₂ substitué ou non substitué ou un groupe hétéroaryle C₃-C₁₂ substitué ou non substitué, de préférence H, un groupe alkyle C₁-C₆ substitué ou non substitué, un groupe cykloalkyle C₃-C₆ substitué ou non substitué, un groupe hétéroalkyle C₁-C₆ substitué ou non substitué, un groupe aryle C₅-C₆ substitué ou non substitué ou un groupe hétéroaryle C₃-C₆ substitué ou non substitué, à condition que R¹ et/ou R² ne soient pas un groupe phényle substitué ou non substitué.

6. Utilisation selon l'une quelconque des revendications 4 ou 5, où le composé est 1,3-dimethylimidazolidin-2-yliden-tetrachlorosilicium(IV) selon la formule Ia₁ 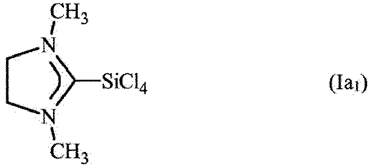 ou 1,3-dimethylimidazolin-2-yliden-tetrachlorosilicium(IV) selon la formule Ib₁.

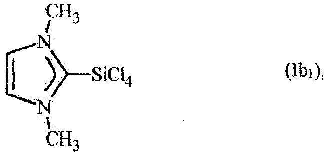

7. Utilisation selon une quelconque des revendications 4 à 6 pour la production d'un complexe métallique à base de carbène.

8. Utilisation selon la revendication 7, **caractérisée en ce que** le métal impliqué dans le complexe métallique à base de carbène est du nickel, du rhodium, du ruthenium, du palladium, de l'argent ou du cuivre.
